# EUROPÄISCHE PATENTSCHRIFT

(11) **EP 2 761 351 B1**
(45) Veröffentlichungstag und Bekanntmachung des Hinweises auf die Patenterteilung: **31.03.2021**
(21) Anmeldenummer: 12778256.3
(22) Anmeldetag: 27.09.2012
(51) Int. Cl.: G02B 6/44, C03C 25/18

(54) **UMMANTELTER LICHTLEITER UND VERFAHREN ZU DESSEN HERSTELLUNG**
SHEATHED OPTICAL WAVEGUIDE AND METHOD FOR PRODUCING IT
CONDUCTEUR OPTIQUE ENVELOPPÉ ET PROCÉDÉ POUR LA FABRICATION DUDIT CONDUCTEUR OPTIQUE

(30) Priorität: 30.09.2011 DE 102011114575
(43) Veröffentlichungstag der Anmeldung: 06.08.2014
(73) Patentinhaber: SCHOTT AG, 55122 Mainz (DE)
(72) Erfinder: SCHULTHEIS, Bernd, 55270 Schwabenheim (DE); KAPPEL, Markus, 55595 Roxheim (DE)
(74) Vertreter: Blumbach · Zinngrebe Patentanwälte PartG mbB
(86) Internationale Anmeldenummer: PCT/EP2012/069136
(87) Internationale Veröffentlichungsnummer: WO 2013/045583

(56) Entgegenhaltungen:
- EP-A2- 1 195 634
- DE-A1- 4 334 232
- DE-A1- 19 608 723
- JP-A- 57 141 605
- US-A1- 2011 135 816

## Beschreibung

Die Erfindung betrifft allgemein Lichtleiter und deren Herstellung. Insbesondere betrifft die Erfindung ummantelte Lichtleiter.

Ummantelungen sind sowohl für Einzelfasern, als auch für Faserbündel gebräuchlich, um den oder die Lichtleiter zu schützen und mechanisch zu stabilisieren. Weiterhin dient im Falle von seitenemittierenden Fasern die Ummantelung auch dazu, Lichteffekte hervorzurufen, beziehungsweise die Ummantelung hat in diesem Fall typischerweise auch eine optische Funktion.

Aus der DE 197 05 920 C2 ist ein Verfahren zur Herstellung von ummantelten Glasfaserbündeln bekannt, bei welchem das Glasfaserbündel in einen Extruder eingeführt, und dort mit einem elastischen Material ummantelt wird. Als elastisches Material wird ein hochtemperaturfestes Silikonmaterial verwendet, welches um das Glasfaserbündel als Schlauch extrudiert wird. Der Silikonschlauch wird gereckt und anschließend vulkanisiert, wobei der Innendurchmesser des gereckten Silikonschlauchs größer ist als der Außendurchmesser des Glasfaserbündels.

Beim Recken ist das Silikonmaterial noch nicht vernetzt, so dass es bis zur Vernetzung noch zu einer Einbettung von Fasern in das weiche Material kommen kann. Es besteht daher die Möglichkeit, dass einzelne Fasern mit dem Silikonmantel verbunden werden. Bei einer mechanischen Belastung des Lichtleiters, wie insbesondere einer Biegung kann es dann zum Bruch dieser Fasern kommen. Insbesondere bei Quarz- oder Glasfasern kann dies aufgrund der Sprödigkeit der Fasern ein Problem darstellen

Die Druckschrift DE 196 08 723 A1 offenbart einen ummantelten Lichtleiter, ein Verfahren und eine Vorrichtung zu dessen Herstellung gemäß dem Oberbegriff der jeweiligen Ansprüche 1, 9 und 13.

Der Erfindung liegt daher die Aufgabe zugrunde, die Ummantelung eines Faserbündels derart zu verbessern, dass ein Anhaften der Fasern vermieden wird.

Diese Aufgabe wird durch den Gegenstand der unabhängigen Ansprüche gelöst. Vorteilhafte Ausgestaltungen und Weiterbildungen der Erfindung sind in den abhängigen Ansprüchen angegeben. Hierzu wird Elastomermaterial zu einem das Bündel umgebenden Schlauch geformt und verfestigt, wobei mit einem Fluid im Schlauch während der Verfestigung des Elastomermaterials der Schlauch an einer radialen Kompression gehindert wird.

Demgemäß sieht die Erfindung ein Verfahren zur Herstellung eines ummantelten Lichtleiters mit mehreren, ein Bündel bildenden lichtleitenden Fasern vor, wobei das Bündel von einer Ummantelung umgeben ist, wobei zur Herstellung des ummantelten Lichtleiters
- das Bündel entlang der Längsrichtung der Fasern durch eine Öffnung eines Spritzwerkzeugs geführt wird, während
- aus einer das Bündel umgebenden, typischerweise ringförmigen Düsenöffnung Elastomermaterial zugeführt wird, so dass das Elastomermaterial einen das Bündel umgebenden Schlauch bildet, und wobei
- durch zumindest eine Öffnung im Spritzwerkzeug, welche innerhalb der Düsenöffnung angeordnet ist, ein Fluid in das Innere des Schlauchs zugeführt wird, und wobei
- das Elastomermaterial zumindest an der Innenwandung des Schlauchs im Bereich des Fluids verfestigt wird, wobei das Verfestigen des Elastomermaterials durch eine Vernetzung erfolgt, und wobei
- das Elastomermaterial ein heißvernetzendes Elastomer umfasst und das Fluid mit einer Temperatur zugeführt wird, welche zu einer Heißvernetzung des heißvernetzenden Elastomers führt, oder
- das Elastomermaterial ein chemisch vernetzendes Elastomer enthält und durch das Fluid ein Agens zur chemischen Vernetzung zugeführt wird. Mit anderen Worten erfolgt die innenseitige Verfestigung in Anwesenheit des Fluids, beziehungsweise innerhalb eines axialen Abschnitts des Schlauchs vor der Düse des Spritzwerkzeugs, in welchem das Fluid vorhanden ist.

Insbesondere wird durch das Fluid zwischen dem Bündel und der Innenwandung des Schlauchs einen Abstand aufrechterhalten. Dieser Abstand verhindert die Einbettung der lichtleitenden Fasern in das Elastomermaterial oder deren Ankleben am Schlauch zumindest solange, bis die Verfestigung des schlauchinnenseitigen Elastomermaterials zur Vermeidung einer Einbettung oder eines Anklebens ausreicht.

Die Vorrichtung zur Durchführung des erfindungsgemäßen Verfahrens, beziehungsweise zur Herstellung erfindungsgemäßer ummantelter Lichtleiter weist folgende Merkmale auf. Die Vorrichtung umfasst ein Spritzwerkzeug mit einer Öffnung zur Durchführung eines Bündels von lichtleitenden Fasern, sowie eine die Öffnung zur Durchführung eines Bündels von lichtleitenden Fasern umgebenden, typischerweise ringförmigen Düsenöffnung zur Zuführung von Elastomermaterial und eine mit der Düsenöffnung kommunizierenden Fördereinrichtung für das Elastomermaterial, wobei die Vorrichtung eine Transporteinrichtung umfasst, um das Bündel während der Extrusion des Elastomermaterials durch die Öffnung des Spritzwerkzeugs zu führen, und wobei die Vorrichtung eine Fluidfördereinrichtung aufweist, welche mit einer innerhalb der Düsenöffnung des Spritzwerkzeugs angeordneten Öffnung kommuniziert, so dass während der Extrusion des Elastomermaterials ein von der Fluidfördereinrichtung gefördertes Fluid in einen sich durch die Extrusion um das Bündel ausbildenden Schlauchs im Bereich vor der Düsenöffnung des Spritzwerkzeugs einführbar ist, wobei eine Einrichtung zum Vernetzen des Elastomermaterials vorgesehen ist, und wobei
- das Elastomermaterial ein heißvernetzendes Elastomer umfasst und die Einrichtung zum Vernetzen eine Heizeinrichtung umfasst, um das Fluid mit einer Temperatur zuzuführen, welche zu einer Heißvernetzung des heißvernetzenden Elastomers führt, oder
- das Elastomermaterial ein chemisch vernetzendes Elastomer enthält und durch das Fluid ein Agens zur chemischen Vernetzung zuführbar ist.

Ein weiterer besonderer Vorteil der Erfindung liegt darin, dass das Verfahren es ermöglicht, auf Trennmittel zu verzichten, mit denen ansonsten verhindert werden könnte, dass lichtleitende Fasern am Schlauch ankleben. Gemäß einer Ausführungsform der Erfindung ist demgemäß der Innenbereich des Schlauchs trennmittelfrei. Dies ist unter anderem deshalb von Vorteil, da das Trennmittel gegebenenfalls die Konfektionierung der Lichtleiter, hier insbesondere die Bearbeitung der Lichtleiterenden erschwert.

Im einfachsten Fall ist die Öffnung, durch welche das Bündel der lichtleitenden Fasern durchgeführt wird, auch gleichzeitig die Öffnung zur Zuführung des Fluids. Gemäß einer weiteren alternativen oder zusätzlichen Ausführungsform der Erfindung wird das Fluid über zumindest eine separate Öffnung zugeführt.

Das Fluid wird typischerweise unter Überdruck in den Schlauch eingeführt, um diesen daran zu hindern, sich fest an die Fasern des Bündels anzulegen. Im Allgemeinen reicht ein leichter Überdruck aus. Da die Verfestigung des Schlauchs an dessen Innenwandung erfolgt, während das Fluid den Schlauch aufbläht, wird dabei ein fester Kontakt, insbesondere eine Einbettung oder ein Anhaften der Fasern des Bündels am noch weichen Elastomermaterial vermieden. In das Fluid kann auch eines reaktives, die Vernetzung beinflussendes Medium wie z. B. ein Gas eingeblasen werden. Dennoch schmiegt sich das Elastomermaterial typischerweise so eng an das Bündel an, dass sich auf der Innenwandung des Schlauches zu den Fasern komplementäre, beziehungsweise korrespondierende Strukturen ausbilden. Mit anderen Worten zeigen sich an der Schlauchinnenseite Abdrücke der Fasern. Dabei haften die Fasern jedoch nicht am Schlauch, beziehungsweise an dessen Innenseite. Diese Abdrücke zeigen sich auch dann, wenn der Innendurchmesser des Schlauches größer ist als der Außendurchmesser des Bündels. Die Abdrücke können auch mehr als 3 m ausgedehnt sein. Das Verhältnis von Innendurchmesser D1 des Schlauchs zum Außendurchmesser des Bündels wird aber gemäß einer Weiterbildung der Erfindung kleiner als 1,5, vorzugsweise kleiner als 1,25 gehalten. Ein zwischen dem Faserbündel und der Innenseite des Schlauchs entstehender Luftspalt beträgt vorzugsweise 0,1 - 0,3 mm.

Dies führt zu einem in mehrerer Hinsicht gegenüber bekannten ummantelten Lichtleitern verbesserten Erzeugnis. Ein Bruch der typischerweise sprödbrüchigen Fasern wird, wie bereits oben dargelegt, vermieden. Dies ist insbesondere dann der Fall, wenn Quarz- oder Glasfasern als lichtleitende Fasern verwendet werden.

Gegenüber einem mit einem vorgefertigten Silikonschlauch überzogenen Faserbündel bietet sich andererseits die Möglichkeit, praktisch unbegrenzte Längen herzustellen. Wird demgegenüber ein vorgefertigter Silikonschlauch über ein Faserbündel gezogen, ist die Länge des Lichtleiters naturgemäß begrenzt. Typischerweise können auf diese aus dem Stand der Technik bekannte Methode nur Längen bis zu einigen, typisch bis maximal 6 m Metern hergestellt werden. Gemäß einer Weiterbildung der Erfindung kann daher der erfindungsgemäße Lichtleiter eine Länge von mindestens 10 Metern, vorzugsweise mindestens 20 Metern, besonders bevorzugt mindestens 100 Metern aufweisen.

Die Abdrücke und damit die Strukturierung der Innenseite des Schlauchs haben den weiteren besonderen Vorteil, dass die Auf- oder Anlagefläche der Fasern aufgrund der durch den Herstellungsprozess bedingten Struktur gegenüber einer glatten Innenseite reduziert wird. Dies ermöglicht eine leichtere Verschiebbarkeit des Faserbündels gegenüber der Schlauchinnenseite und damit eine verbesserte Flexibilität.

Durch eine gezielte Oberflächenbehandlung wie ein Aufrauen des Spritzwerkzeugs oder ein wellenförmiges Profil der Oberfläche des Spritzwerkzeugs kann die Oberflächenstruktur des den Schlauch bildenden Elastomermantels gezielt beeinflusst werden. Eine derartige erfindungsgemäß Struktur der Innenwandung des Schlauches in Form etwa einer Wellenoberfläche bzw. Rauigkeit des Elastomermantels kann das Gleitverhalten des Faserbündels vorteilhaft begünstigen.

Eine Beschichtung, vorzugsweise eine sogenannte Inline-Beschichtung, der Fasern beim Einlauf in das Spritzwerkzeug bzw. den Extruder oder ein Einbringen eines pastenförmigen oder flüssigen Beschichtungsgemisches, sogenanntes TOPCoat, in das Schlauchinnere mit der vorzugsweise als Stützfluid wirkenden Fluids ist eine weitere Alternative zur Einstellung eines erwünschten Gleitverhaltens des Faserbündels in dem Schlauch. Das Beschichtungsgemisch verteilt sich dabei auf den Oberflächen. In einer Vernetzungsstrecke reagiert es unter Temperatur und bildet eine Gleitschicht.

Eine Inline-Oberflächenbehandlung mittels inerten, hydropoben, polymeren Beschichtungsmaterialien (Parylenen) ist eine weitere Möglichkeit zur Einstellung erwünschter, einen Gleitvorgang des Faserbündels begünstigenden Oberflächeneigenschaften. Bevorzugt wird diese Behandlung für medizinische Gegenstände wie Spritzen in einer Vakuum-Beschichtungskammer durchgeführt. Denkbar wäre ein solcher Inline-Prozess aber grundsätzlich auch unter Umgebungsluftdruck.

Mit dem erfindungsgemäßen Herstellungsverfahren ist also ein ummantelter Lichtleiter mit mehreren, ein Bündel bildenden lichtleitenden Fasern herstellbar, wobei das Bündel von einer Ummantelung in Form eines Schlauchs aus oder mit vernetztem Elastomermaterial umgeben ist, wobei die Innenwandung des Schlauchs Abdrücke der lichtleitenden Fasern aufweisen, wobei die lichtleitenden Fasern mit dem Elastomer an der Innenwandung des Schlauchs weder stoffschlüssig verbunden, noch in die Innenwandung eingebettet sind.

Unter einer Einbettung der Fasern wird dabei eine stoffform- oder kraftschlüssige Verbindung mit dem Elastomer verstanden, die eine Bewegung der Faser gegenüber dem Elastomer im eingebetteten Bereich verhindert.

Die Vernetzung kann dabei im gesamten Querschnitt des Schlauches in Gang gesetzt werden, während das Fluid die Anhaftung und/oder Einbettung der Fasern verhindert. Insbesondere kann aber auch zunächst erst eine Vernetzung des Elastomermaterials an der Innenseite erfolgen und anschließend der gesamte Querschnitt des Elastomermaterials des Schlauchs vernetzt werden. Letzter Ausführungsform ist günstig, um einerseits hohe Fertigungsgeschwindigkeiten zu erzielen und andererseits besonders wirksam ein Einbetten der Fasern zu vermeiden.

Denkbar ist aber beispielsweise auch die Verwendung von thermoplastischen Elastomeren als Elastomermaterial. In diesem Fall wird die Verfestigung durch Abkühlen des heiß extrudierten thermoplastischen Elastomermaterials erzielt. Gegebenenfalls kann auch ein nicht elastomeres Thermoplast verwendet werden, sofern die Flexibilität des Lichtleiters für die Anwendung noch ausreichend ist. Die Einflussfaktoren hierbei, wie auch für die Elastomermaterialien sind die Shore-Härte, das E-Modul und die Schlauchgeometrie.

Besonders einfach ist die Verwendung eines Gases als Fluid, welches auch ein Gasgemisch sein kann. Insbesondere kann diesbezüglich auch Luft als Fluid verwendet werden.

Besonders bevorzugt wird weiterhin ein Silikon als Elastomermaterial. Silikone sind über einen weiten Temperaturbereich elastisch, vergleichsweise alterungsbeständig, im Allgemeinen schwer entflammbar und können insbesondere auch mit dem erfindungsgemäßen Verfahren gut verarbeitet werden. Ein weiterer Vorteil dieses Kunststoffs ist die gute Autoklavier-Beständigkeit, wie sie gegebenenfalls für medizinische Produkte benötigt wird. Gemäß dieser Weiterbildung der Erfindung umfasst das Elastomermaterial des Schlauchs dementsprechend elastomeres Silikon. Insbesondere kann zur Verfestigung dabei mit heißvernetzenden Silikon-Elastomeren die oben beschriebene Heißvernetzung vorgenommen werden. In diesem Fall kann als Fluid Heißluft oder ein anderes erwärmtes Gas, wie etwa aufgeheiztes Inertgas zugeführt werden. Als Inertgas eignet sich beispielsweise Stickstoff.

Um eine schnelle, innenseitige Verfestigung des Schlauches zu erzielen, ist es besonders günstig, ein Vernetzungsmittel bei der Extrusion in das Schlauchinnere einzuführen.

Erfindungsgemäß kann alternativ oder zusätzlich zu den bereits genannten prozesstechnischen Maßnahmen während der Extrusion wie dem Einsatz eines Schocktunnels und dem Einblasen eines heißen Fluids (Stützluft) in das Schlauchinnere eine Wärmebehandlung (Tempern) für einige Stunden bei Temperaturen um 300°C, vorzugsweise 4h bei 299°C, als nachgeschalteter Arbeitsschritt durchgeführt werden. Hierbei wird der zuvor auf einer Kabelspule gewickelte ummantelte Lichtleiter abgespult, auf Länge geschnitten und in einem thermischen Prozess nachbehandelt. Bei diesem Prozess wird der Vernetzungsgrad des Elastomers, vorzugsweise des Silikons, erhöht. Restbestandteile des Vernetzungsmittels sowie wahlweise andere vorher eingebrachte Additive wie z B. Verteileröle diffundieren dabei an die Oberflächen wie die Schlauchinnenwandung und Schlauchaußenseite.Die Erhöhung des Vernetzungsgrades sowie das austretende Öl verringern die Gleitreibung der Fasern im Mantel und machen das Kabel geschmeidiger. Über eine Dosierung von dabei verwendeter Menge an Öl kann ein Weiterverarbeitungsprozess wie ein Faserverkleben oder ein Heißverschmelzprozess den Anforderungen entsprechend beeinflusst werden. Die Dosierung soll erfindungsgemäß so gewählt werden, dass ein negativer Einfluss in Form von Schlierenbildung auf einen optischen Sidelighteffekt vermieden wird.

Gemäß noch einer weiteren alternativen oder zusätzlichen Ausführungsform der Erfindung kann für das lichtvernetzendeElastomer ein UV-vernetzendes Elastomer als Elastomermaterial oder dessen Bestandteil verwendet werden. Auch in diesem Fall kann dann eine innenseitige Vernetzung des Elastomermaterials initiiert werden, indem für die Vernetzung geeignetes, ultraviolettes Licht in das Innere des Schlauchs eingekoppelt wird. Dies kann gemäß einer Weiterbildung der Erfindung auch durch die Lichtleiter erfolgen. Die Einkopplung ist besonders dann einfach, wenn seitenemittierende Lichtleiter verwendet werden. Derartige Lichtleiter finden insbesondere für Beleuchtungsanwendungen Verwendung.

Generell können die verschiedenen Vernetzungsarten auch miteinander kombiniert werden. Dies gilt insbesondere auch hinsichtlich einer weiteren Vernetzung des verbleibenden Querschnitts des Schlauchs nach oder während einer anfänglichen schnellen Vernetzung des Elastomermaterials an der Innenwandung des Schlauchs.

Weiterhin muß das Elastomermaterial in Umfangsrichtung gesehen nicht homogen sein. Vielmehr besteht die Möglichkeit der Coextrusion oder Tandemextrusion verschiedener Elastomermaterialien in verschiedenen Sektoren der Düsenöffnung. Gemäß dieser Ausführungsform der Erfindung wird ein ummantelter Lichtleiter hergestellt, bei welchem der Schlauch zumindest zwei Sektoren unterschiedlicher Elastomermaterialien aufweist. Unter unterschiedlichen Elastomermaterialien werden dabei nicht notwendig verschiedene Elastomere verstanden. Vielmehr können sich die Elastomermaterialien auch hinsichtlich möglicher weiterer Beimengungen, wie etwa von Zuschlagstoffen unterscheiden. So ist gemäß einer Weiterbildung dieser Ausführungsform der Erfindung vorgesehen, in das Elastomermaterial für einen der Sektoren einen weißen oder allgemeiner diffus reflektierenden Zuschlagstoff beizumischen. Die Elastomere selber können dabei in den verschiedenen Sektoren gleich sein. Auch können mehrere Extrusionen hintereinander ausgeführt werden, etwa in Form der oben erwähnten Tandemextrusion, um in radialer Richtung und/oder Umfangsrichtung des Schlauchs verschiedene Elastomermaterialien vorzusehen. Bei einer Tandemextrusion werden in einem Arbeitsschritt kontinuierlich zwei oder mehrere Extrusionen durchgeführt, wobei zusätzliche Prozessschritte, wie etwa Bedruckungen, Oberflächenbehandlungen, Umbändelungen, etc. vor, nach, oder zwischen den Extrusionsschritten durchgeführt werden können.

Demgemäß weist ein nach dieser Weiterbildung des Verfahrens hergestellter Schlauch einen ersten Sektor aus transparentem oder transluzentem Elastomermaterial und einen zweiten Sektor aus diffus reflektierendem, weißem oder allgemeiner hellem Elastomermaterial zur Ausbildung einer Reflektorfunktion auf. Die diffuse Reflektivität und/oder helle Ausbildung des Elastomermaterials kann insbesondere durch geeignete Zuschlagstoffe, wie etwa weiße Pigmente oder Metallpartikel erzielt werden. Eine Ummantelung mit einem derart ausgebildeten Schlauch ist besonders von Vorteil in Verbindung mit seitenemittierenden lichtleitenden Fasern. Der weiße oder reflektierende Sektor reflektiert dabei das emittierte Licht zurück, so dass auf der transparenten oder transluzenten Seite des Lichtleiters entsprechend mehr Licht emittiert wird.

Im Falle von lichtleitenden Fasern muss bei einer möglichen weiteren Zgabe etwa von Flammschutzmitteln und anderen Additiven ein Einfluss wie etwa eine Trübung des Schlauches über eine exakte Dosierung kontrolliert werden. Bei der Auswahl von beigemischten Bestandteilen ist auf die natürlichen Farben zu achten, da diese bei Beleuchtung des Schlauchs wieder sichtbar werden. Besonders Flammschutzadditive haben i.d.R. eine leichte Beigefärbung die später einen Gelbstich des beleuchteten Schaluchs hervorrufen kann.

Weiter besteht auch noch die Möglichkeit, weitere Materialien bei der Extrusion hinzuzufügen. Ein Beispiel ist das Einbringen von Metallelementen während der Extrusion, wie beispielsweise Metallstreifen. Diese können zur Verstärkung, etwa als Knickschutz, oder auch als Reflektor dienen. Ein weiteres Beispiel ist das Herstellen eines Keders oder einer Fahne bei der Extrusion, welche in der Anwendung eine leichtere Montage des Kabelbauteils ermöglicht. Hierzu kann ein Gewebe- oder Kunststoffstreifen bei der Extrusion zugeführt werden, welcher sich dann mit dem Elastomer verbindet. Auch kann ein solcher Keder aus einem weiteren coextrudierten Elastomer, insbesondere einem coextrudierten Silikon mit größerer Shore-Härte als der des Schlauchs hergestellt werden.

Gemäß noch einer Ausführungsform der Erfindung kann der Schlauch mehrlagig ausgebildet werden, mit mehreren Lagen unterschiedlicher Beschaffenheit. Gemäß einer ersten Weiterbildung dieser Ausführungsform kann eine weitere Kunststoffschicht, beispielsweise ein thermoplastischer Kunststoff auf oder in den Schlauch aufgebracht werden, vorzugsweise durch einen weiteren Extrusionsschritt. Diese Kunststoffschicht kann dann zur Verstärkung und als Knickschutz dienen.

So kann eine Kunststoff- Gewebe-, Faser oder Metallverstärkung, beispielsweise in Form einer Spirale oder eines Geflechts aufgebracht und in einem weiteren Extrusionsschritt in einen Kunststoff eingebettet werden. Demgemäß umfasst bei dieser Ausführungsform der Erfindung der Schlauch in radialer Richtung eine erste, innere Lage mit einem Elastomermaterial, welche auch die Innenwandung bildet, sowie eine weitere Lage mit einer in einen Kunststoff, vorzugsweise in einem Elastomer eingebetteten Verstärkung.

Die Erfindung wird nachfolgend genauer anhand von Ausführungsbeispielen und unter Bezugnahme auf die beigeschlossenen Zeichnungen näher erläutert. Dabei verweisen gleiche Bezugszeichen in den Figuren auf gleiche oder entsprechende Elemente.

Es zeigen:
Fig. 1 Teile einer Vorrichtung zur Durchführung des Verfahrens für die Herstellung eines ummantelten Lichtleiters,
Fig. 2 eine Variante der in Fig. 1 gezeigten Ausführungsform,
Fig. 3 einen schematischen Querschnitt durch einen erfindungsgemäßen ummantelten Lichtleiter,
Fig. 4 einen Querschnitt durch einen Lichtleiter, bei welchem der Schlauch einen Innendurchmesser aufweist, der größer ist als der Außendurchmesser des Bündels,
Fig. 5 bis 8 Varianten des in Fig. 3 dargestellten ummantelten Lichtleiters 1, und
Fig. 9 und Fig. 10 Aufnahmen der Innenwandung 70 von Silikonschläuchen.

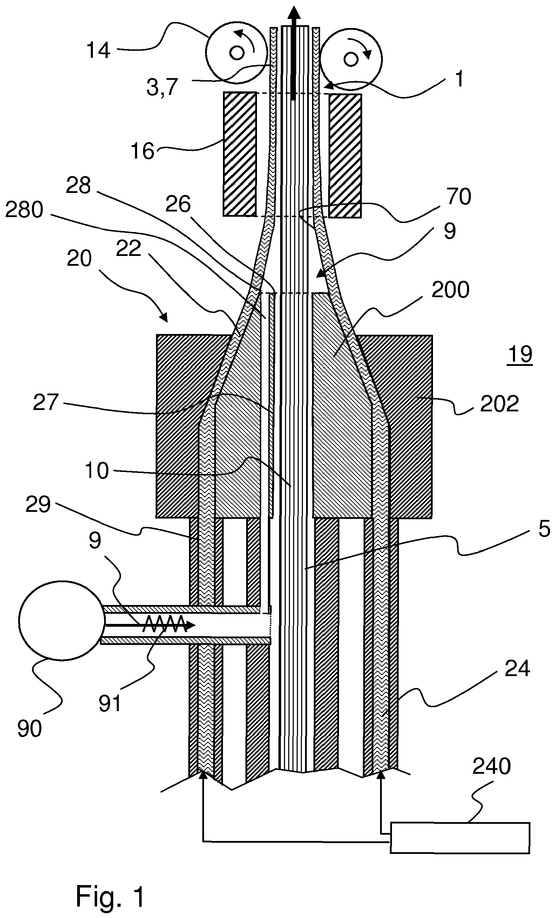

Fig. 1 zeigt Teile einer Vorrichtung 19 zur Durchführung des erfindungsgemäßen Verfahrens im Querschnitt. Die Vorrichtung 19 umfasst einen Extrusionskopf mit einem Spritzwerkzeug 20. Das Spritzwerkzeug 20 umfasst einen Dorn 200 und eine Düse 202. Im Dorn 200 des Spritzwerkzeugs 20 ist eine Öffnung 26 vorgesehen, durch welche ein Bündel 5 von lichtleitenden Fasern 10 geführt wird. Beispielsweise kann dazu eine schematisch dargestellte Zugvorrichtung 14 als Transporteinrichtung vorgesehen sein, um das Bündel 5 während der Extrusion des Elastomermaterials 24 durch die Öffnung 26 des Spritzwerkzeugs 20 zu führen. Die Zugvorrichtung 14 ist vorzugsweise in Extrusionsrichtung nach dem Spritzwerkzeug 20 angeordnet, um das Bündel 5 entlang der Längsrichtung der Fasern 10 durch die Öffnung 26 zu ziehen. Die Zugvorrichtung kann auch durch eine Trommel realisiert werden, welche den ummantelten Lichtleiter 1 aufrollt.

Im Spritzwerkzeug 20 ist weiterhin ein in eine ringförmige Düsenöffnung 22 mündender Fließkanal 29 vorgesehen. Die ringförmige Düsenöffnung 22 umgibt das Bündel 5 der lichtleitenden Fasern 10. Dazu sind bei dem dargestellten Beispiel die Öffnung 26 und die ringförmige Düsenöffnung 22 konzentrisch angeordnet. Die ringförmige Düsenöffnung 22 wird durch einen in einer Öffnung der Düse 202 angeordneten Dorn 200 gebildet.

Während das Bündel 5 der lichtleitenden Fasern 10 durch das Spritzwerkzeug 20 geführt wird, wird mittels der Fördereinrichtung 240, z.B. ein Extruder, das Elastomermaterial 24 zur Düsenöffnung 22 gefördert und damit aus der ringförmigen Düsenöffnung 22 Elastomermaterial 24 extrudiert. Dadurch, dass das extrudierte Elastomermaterial 24 zusammen mit dem Bündel 5 vom Spritzwerkzeug 20 abgezogen wird, bildet sich vor dem Spritzwerkzeug 20 aus dem Elastomermaterial 24 als Ummantelung 3 des Lichtleiters 1 ein das Bündel 5 umgebender Schlauch 7.

Durch zumindest eine Öffnung im Spritzwerkzeug 20, welche innerhalb der ringförmigen Düsenöffnung 22 angeordnet ist, wird außerdem im Bereich vor dem Spritzwerkzeug 20 ein Fluid 9 mittels der mit der Öffnung 26 kommunizierenden Fluidfördereinrichtung 90, z.B. Pumpen oder unter Druck stehende Medienspeicher, in das Innere des Schlauchs 7 eingeführt, welches zwischen dem Bündel 5 und der Innenwandung 70 des Schlauchs 7 einen Abstand aufrechterhält, beziehungsweise den Schlauch 7 daran hindert, so weit radial zu komprimieren, dass die Innenwandung in festen Kontakt mit den Fasern 10 kommt und gegebenenfalls Fasern ankleben oder eingebettet werden.

Im einfachsten Fall, wie auch bei dem in Fig. 1 gezeigten Beispiel wird das Fluid 9 dabei durch die gleiche Öffnung 26 zugeführt, durch welche auch das Bündel 5 der lichtleitenden Fasern 10 aus dem Extrusionkopf 20 herausgeführt wird. Bei dem in Fig. 1 gezeigten Beispiel wird dazu das Fluid 9 unter Überdruck in einen Kanal 27 eingeführt, in welchem das Bündel 5 geführt ist, und welcher in der Öffnung 26 mündet. Die Fluidströmung in Richtung auf die Öffnung 26 wird gemäß einer Weiterbildung als annähernd laminare Strömung um das Bündel 5 ausgelegt, beziehungsweise eingestellt.

Fig. 1 zeigt auch eine Alternative, bei welcher das Fluid 9 über einen Fluidkanal 280 durch eine separate Fluidöffnung 28 dem Bereich vor dem Spritzwerkzeug 20 zwischen dem Schlauch 7 und dem Bündel 5 zugeführt wird. Selbstverständlich ist es auch möglich, sowohl über die Öffnung 26, als auch eine separate Öffnung 28 ein Fluid 9 oder auch gegebenenfalls zwei oder mehrere verschiedene Fluide zuzuführen.

Das aus der ringförmigen Düsenöffnung 22 austretende, den Schlauch 7 bildende Elastomermaterial 24 wird weiterhin in Anwesenheit des Fluids 9 an der Innenwandung 70 des Schlauchs 7 verfestigt, während das Fluid 9 im Inneren des Schlauchs 7 den Abstand zum Bündel 5 der lichtleitenden Fasern 10 aufrechterhält. Das Verfestigen erfolgt insbesondere durch Heißvernetzen des Elastomermaterials 24, welches dazu dementsprechend ein heißvernetzendes Elastomermaterial ist oder ein solches enthält. Insbesondere kann dazu ein heißvernetzendes Silikon-Elastomer als Elastomermaterial 24 verwendet werden. Die Vernetzung wird durch das Fluid 9 bewirkt, welches dazu mit einer für die Heißvernetzung des Elastomermaterials hinreichenden Temperatur durch die Öffnung 26 tritt. Dabei wird zunächst nur eine dünne Schicht an der Innenseite 70 des Schlauches 7 vernetzt. Der durch das Fluid 9 aufrechterhaltene Abstand zwischen der Schlauchinnenwandung 70 und dem Bündel 5 verhindert, dass lichtleitende Fasern 10 des Bündels am Elastomermaterial 24 ankleben können oder gar in das Elastomermaterial eingebettet werden.

Als Fluid 9 dient bevorzugt Luft. Um die Vernetzung des Elastomermaterials 24 zu bewirken, wird bei der in Fig. 1 gezeigten Ausführungsform dementsprechend Heißluft als Fluid 9 verwendet. Um die Luft aufzuheizen, ist dazu eine Heizeinrichtung 91 vorgesehen. Geeignet als Heizeinrichtung 91 ist beispielsweise, wie dargestellt, eine Heizwendel in der Zuleitung zum Spritzwerkzeug 20.

Bevorzugte Prozessparameter hinsichtlich dieser Stützluftinjektion (abhängig von Kabeltyp, Kabelgeometrie, Silikon-Typ): sind ein Temperaturbereich der Stützluft im Bereich von 175 °C bis 220 °C und ein Überdruck im Bereich von 50 bis 80 mbar. Dieser Druckbereich ist auch für andere Fluide und/oder Vernetzungsarten, wie etwa für eine chemische oder UV-Vernetzung geeignet.

Beispielsweise hat sich bei einem Kabelaußendurchmesser von 4 mm und einer Wandstärke von 0,5 mm mit einem Silikon der Shorehärte 70A und einer Abzugsgeschwindigkeit von 5 m/min eine Stützlufttemperatur von 195°C als vorteilhaft erwiesen.

Die Heißluft verlässt demgemäß mit dem Bündel 5 durch die Öffnung 26 das Spritzwerkzeug 20 und verhindert durch ihren Überdruck dass das Silikon, welches gleichzeitig aus der ringförmigen Öffnung 22 aus dem Extruder strömt, kollabiert und am Bündel 5 anhaftet. Gleichzeitig wird durch die Heißluft der Vernetzungsvorgang des Silikon-Elastomers schlagartig an der Innenwand 70 des Schlauches 7 aktiviert.

Um zu vermeiden, dass sich das Elastomermaterial 24 bereits im Spritzwerkzeug 20 so stark aufheizt, dass es darin bereits beginnt zu vernetzen, wird in Weiterbildung der Erfindung der Kanal 27 gegenüber dem in die ringförmige Öffnung 22 mündenden Fließkanal 29 für die Zuführung des Elastomermaterials 24 thermisch isoliert. Durch einen Temperatureintrag in das Elastomermaterial 24 hinein würde ansonsten eine Aktivierung des Vernetzungsvorgangs bereits im Spritzwerkzeug 20 in Gang gesetzt, was zu Inhomogenitäten und dem Abbau bzw. dem Verlust der Materialeigenschaften führen kann.

Insbesondere ist es günstig, eine gute thermische Isolierung des Dorns 200, ganz besonders hier an der Dorninnenseite zu schaffen, da ansonsten eine Wärmeübertragung an das durchströmende Elastomermaterial 24 erfolgt. Entsprechend kann auch bei der ebenfalls dargestellten Ausführungsform mit separatem Fluidkanal 280 im Dorn 200 dieser Fluidkanal 280 thermisch isoliert sein. Gemäß einer Weiterbildung der Erfindung, ohne Beschränkung auf das spezielle in Fig. 1 dargestellte Beispiel umfasst dementsprechend das Spritzwerkzeug einen in einer Düse 202 angeordneten Dorn 200, wobei im Dorn 200 ein Fluidkanal vorgesehen ist, der thermisch gegenüber der im Betrieb vom Elastomermaterial 24 umströmten Außenseite des Dorns 200 isoliert ist. Dieser Fluidkanal kann entweder der in Fig. 1 gezeigte separate Fluidkanal 280 oder auch der in die Öffnung 26 mündende Kanal 27 sein. Als geeignete Isolationswerkstoffe sind diverse Kunststoffe mit guter Gleiteigenschaft, wie z.B. PTFE (Polytetrafluorethylen) "Teflon®" oder POM (Polyoxymethylen) "Delrin®", geeignet. Der verwendete Typ des Isolationskunststoffes hängt u.a. von der Stützlufttemperatur ab. Hinsichtlich seiner Temperaturbeständigkeit und seiner sehr guten Gleiteigenschaften hat sich PTFE besonders bewährt. Demgemäß ist in Weiterbildung der Erfindung, ohne Beschränkung auf das in Fig. 1 gezeigte Beispiel vorgesehen, dass die ringförmige Düsenöffnung 22 gegenüber der zumindest einen Öffnung 26 welche innerhalb der ringförmigen Düsenöffnung 22 angeordnet ist, und über die das Fluid 9 dem Inneren des Schlauchs 7 zugeführt wird, eine Wärmeisolation angeordnet ist. Diese umfasst vorzugsweise einen der oben genannten Kunststoffe, besonders bevorzugt PTFE. Insbesondere kann dabei auch der Dorn 200 aus einem Kunststoff wie PTFE gefertigt sein, um den Wärmeübertrag von der Öffnung 26 in das Elastomermaterial im Spritzwerkzeug 20 zu verringern.

Mit zunehmender Entfernung vom Spritzwerkzeug wird das Fluid 9 verdrängt, und / oder zwischen Bündel 5 und Schlauch 7 zumindest teilweise eingelagert so dass sich der Schlauch 7 das Bündel 5 enger umschließt. Währenddessen erfolgt die vollständige Vernetzung. Dazu ist bei dem in Fig. 1 gezeigten Beispiel eine vor dem Spritzwerkzeug 20, beziehungsweise in Zugrichtung des Bündels dem Spritzwerkzeug 20 nachgeschaltet angeordnete Vernetzungseinrichtung 16, beispielsweise in Form eines Heizrings, Heißluftgebläses, Salzbades für die chemische Vernetzung, oder eine UV-Lichtquelle für lichtvernetzende Elastomermaterialien vorgesehen.

Die Auslegung des Spritzwerkzeugs 20, sowie des Stützluftdruckes, der Fluidtemperatur, im Speziellen der Stützlufttemperatur und der Fluidmenge erfolgt vorzugsweise abhängig von der Schlauchdimension, den Materialeigenschaften und der Abzugsgeschwindigkeit.

Nachfolgend werden gemäß einer Weiterbildung der Erfindung geeignete Werte für die Prozessführung und die Dimensionen der Lichtleiter angegeben:
- Abzugsgeschwindigkeiten zwischen 2 m/min bis hin zu 200 m/min,
- Kabeldimensionen:
   Der Durchmesser des Bündels 5 liegt vorzugsweise im Bereich von 0,5 Millimeter bis 12 Millimetern.

Die Abmessungen des Schlauchs 7 können dabei vorzugsweise reichen von 1,0 mm äußerer Durchmesser und 0,6 mm innerer Durchmesser für ein Bündeldurchmesser von 0,5 mm bis hin zu 20 mm äußerer Durchmesser und 16 mm Innendurchmesser für einen Bündeldurchmesser von 12,0 mm.

Anhand dieser Ausführungsbeispiele wird deutlich, dass allgemein der Innendurchmesser des Schlauchs 7 etwas größer ist, als der Außendurchmesser des Bündels 5. Trotz des im Vergleich zum Außendurchmesser des Bündels 5 größeren Innendurchmessers des Schlauchs 7 sind dabei Abdrücke der Fasern 10 an der Innenseite 70 vorhanden.

Typische mit dem Verfahren hergestellte ummantelte Lichtleiter und deren Anwendung sind:
Beispiel 1:
   2,0 mm Glasfaserbündel mit 53 µm Faserdurchmesser, Silikonmantel aus grau opaken Silikon, z.B. WACKER Silpuran 8630/60 oder Silpuran 4366.
Beispiel 2:
   3,0 mm dickes seitenemittierendes Glasfaserbündel mit 70 µm Faserdurchmesser, Silikonmantel aus transluzentem Silikon, z.B. WACKER EL R 501/75 MH E. Derartige Lichtleiter eignen sich unter anderem zur Konturbeleuchtung im Kabinenbereich von Flugzeugen oder als Konturbeleuchtung im Außenbereich von Fahrzeugen, wo insbesondere mit einer erhöhten UV-Belastung zu rechnen ist.

Für die Anwendung zur Beleuchtung im Kabinenbbereich von Flugzeugen können die unter den nachfolgenden Marken vertriebenen Silikone verwendet werden. Diese die Luftfahrtnorm ABD0031 erfüllenden Materialien sind u.a.: ELASTOSIL® R 401/80 MH E, POWERSIL® 310 MH E, ELASTOSIL® R plus 4366/60, ELASTOSIL® R 501/75 MH E der Wacker Chemie und Addisil® 2080 E und Silplus® EX80 der Momentive Perfomance Materials.

Gemäß einer Variante der vorstehend beschriebenen Beispiele wird ein chemisch vernetzendes Elastomer als Elastomermaterial 24 verwendet und dem Fluid ein Agens beigemischt oder ein solches Agens als Fluid 9 verwendet, welches die Vernetzung des Elastomermaterials 24 in Gang setzt.

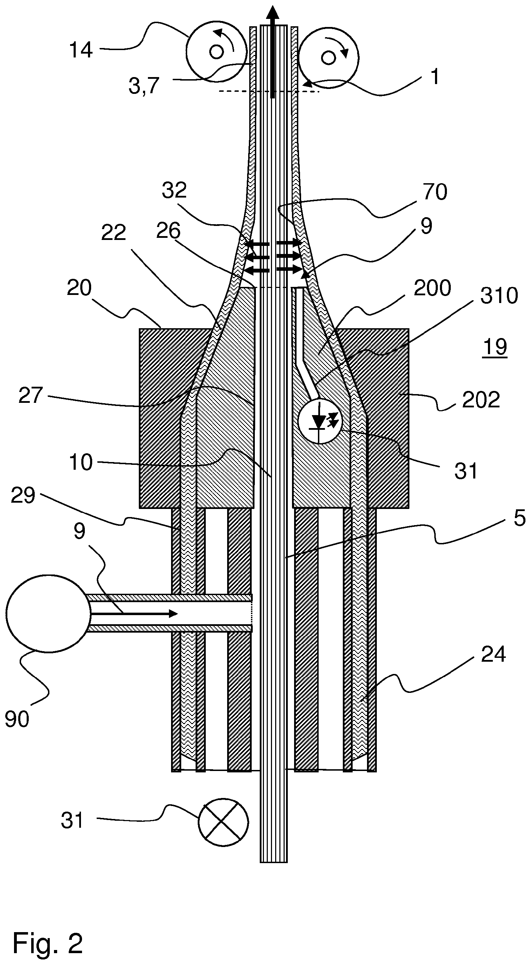

Noch eine Variante ist in Fig. 2 dargestellt. Hier wird als Elastomermaterial 24 ein mit UV-Licht vernetzbares Elastomermaterial verwendet. Die lichtleitenden Fasern 10 sind hier sogenannte seitenemittierende Fasern. Diese enthalten entlang ihrer Länge streuende Elemente, welche das in der Faser geleitete Licht herausstreuen. Faserbündel mit solchen seitenemittierenden Fasern finden für Beleuchtungszwecke Anwendung. Umgekehrt erlaubt diese Eigenschaft der Fasern 10 auch eine Einkopplung des für die Vernetzung verwendeten Lichts.

Für die Vernetzung wird das Licht, vorzugsweise blaues oder ultraviolettes Licht mit einer Lichtquelle 31 eingekoppelt und entlang des Faserbündels 5 geleitet. Das im Inneren des Schlauchs 7 wieder austretende Licht 32 bewirkt die Vernetzung und Verfestigung des Elastomermaterials 24 im Bereich, in welchem die Innenwandung 70 des Schlauchs 7 durch das Fluid 9 in Abstand zum Bündel 5 gehalten wird. Gemäß noch einer Ausführungsform der Erfindung weist der Dorn 200 eine Lichtquelle 31, z.B. in Form einer UV-LED oder blau leuchtenden LED, zur Vernetzung des Elastomermaterials 24 im Bereich vor dem Dorn 200 auf. Beispielsweise kann dazu der Dorn 200 dazu eingerichtet sein, das Licht durch den Dorn 200 zu leiten, um es am Ende des Dorns in das zu vernetzende Elastomermaterial einzukoppeln. Beispielsweise kann dazu ähnlich zu der in Fig. 1 dargestellten Ausführungsform ein lichtleitender Kanal im Dorn 200 anstelle des dort eingezeichneten Fluidkanals 280 vorgesehen werden. Gemäß noch einer Ausführungsform der Erfindung kann der Dorn 200 aus für das einzukoppelnde Licht transparentem Material gefertigt sein.

Die Lichtquelle 31 kann, wie in Fig. 2 gezeigt, im Dorn 200 angeordnet sein. Diese kann das Licht, wie dargestellt, über einen lichtleitenden Kanal 310 in den Bereich einkoppeln, in welchem die Vernetzung erfolgen soll. Auch bei einer außerhalb des Dorns 200 angeordneten Lichtquelle 31 kann ein solcher lichtleitender Kanal im Dorn vorgesehen werden, um das Licht zur Vernetzung des Elastomermaterials in den Bereich vor dem Spritzwerkzeug 20, in welchem das Fluid 9 zwischen dem Schlauch 7 und dem Bündel 5 vorhanden ist, einzukoppeln. Demgemäß umfasst der Dorn 200 bei diesen Ausführungsformen der Lichtquellen 31 zumindest einen lichtleitenden Kanal. Noch eine weitere Möglichkeit besteht darin, die Lichtquelle 31 direkt am Dornende vorzusehen. Als kompakte Lichtquellen 31 zum Einbau im Dorn 200 eignen sich insbesondere Halbleiter-Lichtquellen, wie Leuchtdioden oder Laserdioden. Beiden letztgenannten Ausführungsformen ist also gemeinsam, dass die Lichtquelle 31 im Dorn 200 angeordnet ist.

Um den Elastomerschlauch für den weiteren Prozess zu stabilisieren, wird also generell mittels geeigneter Vernetzungssysteme, wie Salzbad, Heißlufttunnel, IR-Strahler oder UV-Licht der Vernetzungsvorgang des Elastomermaterials 24 aktiviert und/ oder abgeschlossen. Die verschiedenen Möglichkeiten der Vernetzung können hinsichtlich der innenseitigen Vernetzung und der weiteren, Vernetzung des gesamten Schlauchquerschnitts auch kombiniert werden.

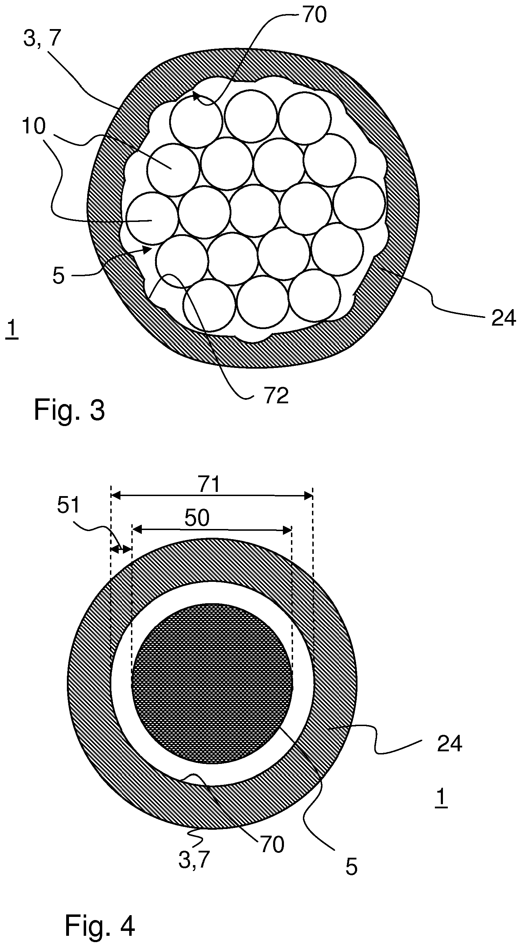

Fig. 3 zeigt schematisch einen Querschnitt durch einen mit dem erfindungsgemäßen Verfahren herstellbaren ummantelten Lichtleiter 1. Das Bündel 5 der lichtleitenden Fasern 10 ist von einer Ummantelung 3 in Form eines Schlauchs 7 umgeben. Die Innenwandung 70 folgt der Kontur des Bündels. Insbesondere haben sich durch das Herstellverfahren Abdrücke 72 der lichtleitenden Fasern 10 in der Innenwandung 70 ausgebildet. Die Fasern 10 liegen zwar typischerweise eng an der Innenwandung 70 des Schlauchs 7 an, oder weisen noch einen kleinen Abstand auf, wie bei den oben genannten Ausführungsbeispielen, sind dabei aber mit dem Elastomer des Schlauchs 7, vorzugsweise ein Silikon, weder stoffschlüssig verbunden, noch in die Innenwandung 70 eingebettet. Da der Schlauch sich gegenüber den Fasern 10, beziehungsweise dem Bündel 5 bewegen kann, korrespondieren die Positionen der Abdrücke 72 im Allgemeinen nicht mit den Positionen derjenigen Fasern 10, welche die Abdrücke 72 hervorgerufen haben. Die Abdrücke 72 führen aber, wie anhand von Fig. 3 auch ersichtlich zu einer Reliefstruktur der Innenwandung 70, welche die Kontaktfläche des Elastomermaterials 24 mit den Fasern 10 reduziert. Dies führt zu einer erhöhten Flexibilität des gesamten Lichtleiters, da bei einer Biegung des Lichtleiters 1 sich die Fasern 10 leichter gegenüber der Innenwandung 70 verschieben lassen.

Generell werden Wandstärken des Schlauchs 7 im Bereich zwischen 0,1 mm und 1 mm, typisch 0,2 mm bis 0,6 mm bevorzugt.

Der Durchmesser des Bündels 5 liegt gemäß noch einer Weiterbildung der Erfindung bevorzugt im Bereich von 0,5 mm bis 10 mm, typischerweise 1 mm bis 5 mm.

Allgemein, ohne Beschränkung auf die spezielle Ausführung der Fig. 3 können die lichtleitenden Fasern 10 des Bündels 5 parallel liegen, oder auch verdrillt, verseilt oder verflochten sein. Letztere Möglichkeiten sind gegebenenfalls vorteilhaft, um das Bündel 5 entweder flexibler und biegsamer (insbesondere beim Verseilen), oder auch steifer zu gestalten.

Weiterhin kann auch eine Schlichte vorgesehen werden, um die Fasern 10 des Bündels 5 zusammenzuhalten und/oder eine Haftung der Fasern 10 am Schlauchinneren zu vermeiden. Geeignet zum Schlichten sind beispielsweise ein Stearinsäure/Alkohol-Gemisch, Fluor-Alkyl-Silan (FAS) in Alkohol gelöst, Stearinsäure/Alkohol-Gemisch mit zusätzlichem Klebstoffanteil.

Gemäß noch einer Ausführungsform der Erfindung können die Fasern 10 des Bündels 5 von einem Bindemittel, wie beispielsweise einem Kunstharz umgeben und/oder in dieses eingebettet sein.

Weiterhin können im Elastomermaterial 24 des Schlauchs 7 zusätzlich brandhemmende Substanzen enthalten sein. Auf diese Weise lassen sich die Anforderungen gemäß FAR 25.853 (FAA, US), sowie die Anforderungen hinsichtlich "Fire-Properties", "Smoke Density" und "Toxicity" ("FST") erfüllen, wie sie insbesondere von Flugzeugherstellern gefordert werden.

Fig. 4 zeigt nochmals einen Querschnitt durch einen ummantelten Lichtleiter 1, bei welchem das Bündel 5 idealisiert mit rundem Querschnitt dargestellt ist. Wie anhand von Fig. 4 zu erkennen ist, ist der Innendurchmesser 71 des Schlauchs 7 aufgrund der Vernetzung während das Fluid 9 eine Anhaftung des Elastomermaterials 24 am Bündel 5 vermeidet, größer als der Außendurchmesser 50 des Bündels 5. Dementsprechend ergibt sich ein Abstand 51 zwischen Bündel 5 und Innenwandung 70 des Schlauchs 7. Wie auch bei dem dargestellten Beispiel ist dann aber vorzugsweise nur ein kleiner Unterschied zwischen den genannten Durchmessern vorhanden. Im Speziellen beträgt dabei das Verhältnis von Innendurchmesser 71 des Schlauchs zum Außendurchmesser 50 des Bündels weniger als 1,5 : 1, vorzugsweise weniger als 1,25 : 1.

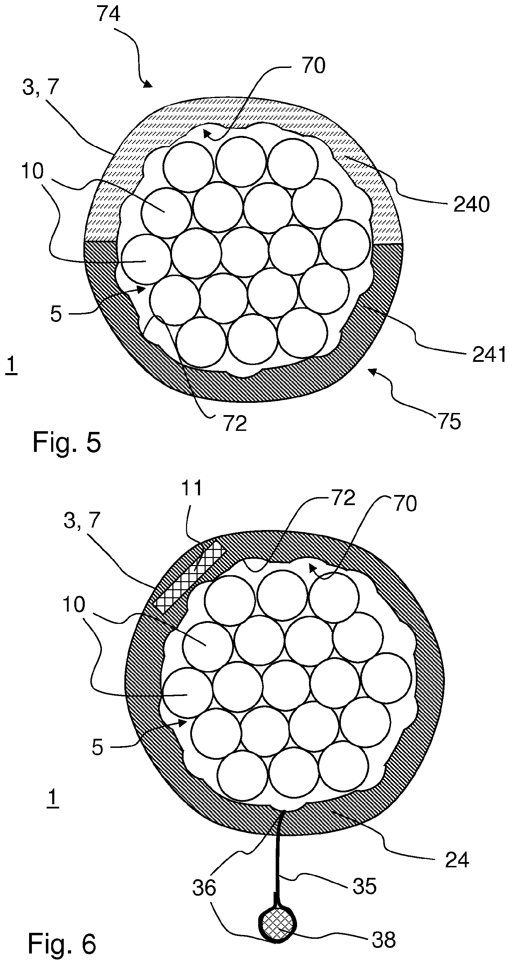

Fig. 5 zeigt eine Variante des in Fig. 3 dargestellten ummantelten Lichtleiters 1. Bei dieser Variante weist der Schlauch 7 einen ersten Sektor 74 aus lichtdurchlässigem Elastomermaterial 240 und einen zweiten Sektor 75 aus diffus reflektierendem oder weißem Elastomermaterial 241 auf. Um eine derartige Ummantelung 3 in Form eines zweigeteilten Schlauchs herzustellen, kann eine entsprechend zweigeteilte ringförmige Düsenöffnung 22 mit getrennten Zuführkanälen für die verschiedenen Elastomermaterialien 240, 241 verwendet werden.

Bei dem in Fig. 5 gezeigten Beispiel sind die beiden Sektoren 74, 75 etwa gleich groß, umfassen also jeweils einen Winkelbereich von etwa 180°. Die in Fig. 5 gezeigte Ausführungsform der Erfindung ist insbesondere geeignet als linienförmige Lichtquelle, indem seitenemittierende Fasern 10 verwendet werden. Das in Richtung des Sektors 75 von den Fasern 10 abgestrahlte Licht wird dabei am weißen Elastomermaterial 241 diffus reflektiert und kann dann durch das transparente Elastomermaterial 240 abgestrahlt werden. Wird ein derartiger ummantelter Lichtleiter 1 für die Beleuchtung verwendet, etwa um Kanten hervorzuheben, oder Wege zu markieren, ist es dann aber günstig, den Lichtleiter in der richtigen Orientierung zu fixieren, damit der lichtabstrahlende Sektor 74 in die gewünschte Richtung weist. Dies kann beispielsweise mit einem Keder erzielt werden. Auch für die weiteren Ausführungsformen der Erfindung kann ein Keder vorgesehen werden, um den Lichtleiter 1 leichter verlegen und fixieren zu können.

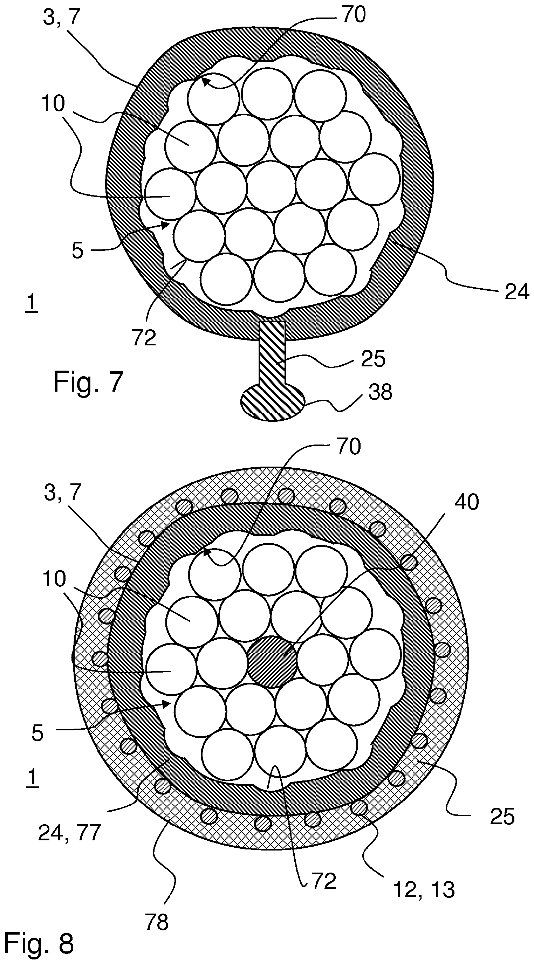

Die Fig. 6 und 7 zeigen zwei solche Varianten der in Fig. 1 dargestellten Ausführungsform. Bei dem in Fig. 6 gezeigten Beispiel ist eine Fahne 35, beispielsweise in Form einer Gewebefahne mit einem ihrer Kanten 36 in den Schlauch 7 eingebettet. Die andere Kante 36 der Fahne 35 ist mit einem Keder 38 versehen. Mit dem Keder 38 kann dann der Lichtleiter 1 schnell und einfach in einer geeigneten Halterung, wie etwa einer Kederschiene fixiert werden.

Zur Herstellung wird die Fahne 35 ebenso wie das Bündel 5 der lichtleitenden Fasern 10 durch das Spritzwerkzeug 20 geführt, während das Elastomermaterial 24 extrudiert wird. Beispielsweise kann bei der in Fig. 1 gezeigten Ausführungsform ein an die ringförmige Düsenöffnung 22 angrenzender oder in diese mündender Schlitz vorgesehen werden, durch welchen die Fahne 35 geführt wird.

Gemäß einer weiteren, ebenfalls in Fig. 6 dargestellten Variante kann auch ein Verstärkungsstreifen in den Schlauch 7 einextrudiert werden. Beispielsweise kann dazu ein Metallstreifen 11 in die Ummantelung 3 eingebettet werden. Mit einer solchen Verstärkung kann ein Knickschutz und/oder eine Zugentlastung für das Bündel 5 erzielt werden. Selbstverständlich kann eine solche Verstärkung auch bei den anderen, hier beschriebenen Ausführungsformen erfindungsgemäßer Lichtleiter 1 verwendet werden. Ein solcher Metallstreifen 11 kann auch als Reflektor bei der Verwendung seitenemittierender Fasern verwendet werden. Als Reflektoren können auch andere Materialien, wie etwa weiß oder diffus reflektierende Streifen eingesetzt werden.

Bei der in Fig. 7 gezeigten Variante ist ebenfalls ein Keder 38 vorgesehen, wobei hier der Keder aus coextrudiertem Material, z.B. aus einem Elastomermaterial 25 mit gegenüber dem Elastomermaterial 24 des Schlauchs höheren Shore-Härte hergestellt ist. Auch diese Ausführungsform der Erfindung kann durch ein entsprechend ausgebildetes Spritzwerkzeug 20 hergestellt werden.

Bei den bisher beschriebenen Ausführungsbeispielen ist der Querschnitt des ummantelten Lichtleiters 1 im Wesentlichen rund. Es ist gerade mit dem erfindungsgemäßen Verfahren aber auch leicht und ohne weiteres möglich, andere und komplexere Querschnitts-Geometrien herzustellen. Als Beispiele seien rechteckige oder sogar T-förmige Querschnitte genannt. Derartig geformte ummantelte Lichtleiter sind besonders vorteilhaft für eine leichte Montage.

Fig. 8 zeigt als weiteres Beispiel einen Lichtleiter 1 mit einer mehrlagigen Ummantelung 3. Der Schlauch 7 weist dabei in radialer Richtung eine erste, innere Lage 77 mit einem Elastomermaterial 24 auf. Die innere Lage 77 bildet auch die Innenwandung 70 des Schlauchs 7. Über die innere Lage 77 ist eine Verstärkung 12 aufgezogen und in einem Kunststoff, vorzugsweise einem Elastomer 25 eingebettet. Die Verstärkung kann ein Gewebe oder Geflecht 13 sein. Alternativ kann auch eine Kunststoff- oder Metallspirale als Verstärkung 12 um die innere Lage 77 gewickelt und dann im Kunststoff oder Elastomer 25 eingebettet werden.

Zur Herstellung wird in einem ersten Schritt mit einem Silikonmantel extrudiert, so wie dies anhand von Fig. 1 oder Fig. 2 beschrieben wurde. Anschließend wird ein Kunststoff- oder Metallgeflecht 13 oder eine Kunststoff- oder Metallspirale aufgebracht, und in einem zweiten Extrusionsschritt ein äußerer Mantel aus Silikon aufgebracht. Für diesen Schritt kann wiederum eine Vorrichtung ähnlich zu Fig. 1 oder Fig. 2 verwendet werden, wobei aber ein Fluid 9 nicht benötigt wird, wenn die äußere Lage 78 fest mit der inneren Lage 77 verbunden werden soll.

Mit dieser Ausführungsform der Erfindung wird eine automatisierte Herstellung von mechanisch verstärkten Lichtleitkabeln mit integriertem Knickschutz, mit Zugentlastung und/ oder einem Trittschutz ermöglicht. Eine mögliche Anwendung solcher ummantelter Lichtleiter sind z.B. Endoskop-Lichtleiterbauteile. Ein aufwendiges Montieren per Hand kann entfallen, zudem können verstärkte Lichtleitkabel ohne weiteres mit Längen deutlich mehr als 2,5 m hergestellt werden, was derzeit mit gängigen Verfahren eine Längenbegrenzung darstellt.

Das Bündel 5 muss weiterhin nicht ausschließlich lichtleitende Fasern 10 enthalten. Vielmehr können in Weiterbildung der Erfindung, wie auch in Fig. 8 dargestellt, auch elektrische Leiter im Bündel vorhanden sein. In Fig. 8 ist ein einzelner elektrischer Leiter 40 dargestellt. Es ist aber selbstverständlich auch möglich, mehrere Leiter vorzusehen.

Auch bei den weiter oben beschriebenen Ausführungsbeispielen der Erfindung können solche elektrischen Leiter 40 vorgesehen sein. Demgemäß ist in Weiterbildung der Erfindung ohne Beschränkung auf die speziellen, dargestellten Ausführungsbeispiele ein erfindungsgemäßer ummantelter Lichtleiter 1 vorgesehen, bei welchem das Bündel 5 der lichtleitenden Fasern 10 zumindest einen elektrischen Leiter 40 enthält.

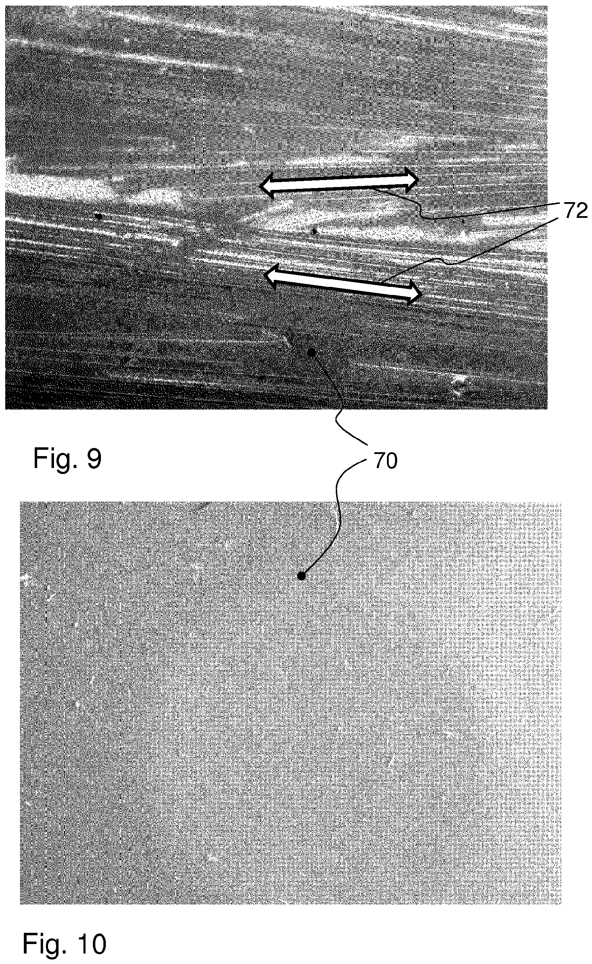

Die Fig. 9 und 10 zeigen zwei Auflicht- Aufnahmen der Innenwandung 70 von Silikonschläuchen. In Fig. 9 ist dabei die Innenwandung 70 eines Schlauches 7 gezeigt, welcher nach dem erfindungsgemäßen Verfahren hergestellt wurde. Der in Fig. 10 gezeigte Schlauch wurde ebenfalls durch Extrudieren von Silikon-Elastomer hergestellt, jedoch ohne Fluid 9 und ohne ein Bündel 5 von lichtleitenden Fasern 10 mit durch das Spritzwerkzeug 20 zu führen.

Wie anhand von Fig. 9 zu erkennen ist, zeigt die Innenwandung 70 deutliche Abdrücke 72 der Fasern 10. Diese Abdrücke 72 haben die Gestalt von Riefen. Zwei dieser Riefen sind zur Verdeutlichung mit Doppelpfeilen markiert. Die Ränder der Riefen, beziehungsweise der Abdrücke 72 sind durch die Beleuchtung als helle Linien erkennbar.

Demgegenüber erscheint die Oberfläche der Innenwandung 70 des in Fig. 10 gezeigten Beispiels mehr oder weniger strukturlos und glatt. Eine ähnliche Struktur ergibt sich auch bei einem vorkonfektionierten Schlauch, der dann über ein Lichtleiterbündel gezogen wird. Anhand der Fig. 9 und 10 wird demgemäß ersichtlich, dass sich erfindungsgemäß hergestellte ummantelte Lichtleiter 1 eindeutig von auf andere Weise hergestellten Lichtleitern unterscheiden lassen.

Es ist dem Fachmann ersichtlich, dass die Erfindung nicht auf die in den Figuren dargestellten Ausführungsbeispiele beschränkt ist, sondern im Rahmen der nachfolgenden Ansprüche vielfach abgeändert werden kann. Insbesondere können die einzelnen Merkmale der Ausführungsbeispiele auch miteinander kombiniert werden. So kann ein Verstärkungselement, wie es in Fig. 6 gezeigt ist, auch bei allen anderen Ausführungsbeispielen eingesetzt werden.

Weiterhin können auch mehrere solcher Elemente vorgesehen sein. Beispielsweise können auch elektrische Leiter 40 bei allen Ausführungsformen der Erfindung im Bündel 5 integriert werden. Denkbar ist dabei weiterhin auch, solche Leiter 40 auch in der Ummantelung 3 vorzusehen.

### Bezugszeichenliste

- 1: Lichtleiter
- 3: Ummantelung
- 5: Bündel
- 7: Schlauch
- 9: Fluid
- 10: lichtleitende Fasern
- 11: Metallstreifen
- 12: Verstärkung
- 13: Geflecht
- 14: Zugvorrichtung
- 16: Vernetzungseinrichtung
- 19: Vorrichtung zur Herstellung eines ummantelten Lichtleiters 1
- 20: Spritzwerkzeug
- 22: Düsenöffnung
- 24, 25:
- 240, 241: Elastomermaterial
- 26: Öffnung
- 27: Kanal
- 28: separate Fluidöffnung
- 29: Fließkanal
- 31: Lichtquelle
- 32: austretendes Licht
- 35: Fahne
- 36: Kante von 35
- 38: Keder
- 40: elektrischer Leiter
- 50: Außendurchmesser von 5
- 51: Abstand zwischen 5, 70
- 70: Innenwandung von 7
- 71: Innendurchmesser von 7
- 72: Abdrücke der lichtleitenden Fasern 10 in 70
- 74, 75: Sektoren von 7
- 77: innere Lage von 7
- 78: äußere Lage von 7
- 90: Fluidfördereinrichtung
- 91: Heizeinrichtung
- 200: Dorn
- 202: Düse
- 240: Fördereinrichtung für Elastomermaterial
- 280: Fluidkanal
- 310: lichtleitender Kanal

## Patentansprüche

1. Ummantelter Lichtleiter mit mehreren, ein Bündel (5) bildenden lichtleitenden Fasern (10), wobei das Bündel (5) von einer Ummantelung (3) in Form eines Schlauchs (7) mit vernetztem Elastomermaterial (24) umgeben ist, **dadurch gekennzeichnet dass** die Innenwandung (70) des Schlauchs (7) Abdrücke (72) der lichtleitenden Fasern (10) aufweist, wobei die lichtleitenden Fasern (10) mit dem Elastomer an der Innenwandung (70) des Schlauchs (7) weder stoffschlüssig verbunden, noch in die Innenwandung eingebettet sind.

2. Ummantelter Lichtleiter gemäß dem vorstehenden Anspruch, **dadurch gekennzeichnet, dass** das Elastomermaterial (24) des Schlauchs (7) ein elastomeres Silikon umfasst.

3. Ummantelter Lichtleiter gemäß einem der beiden vorstehenden Ansprüche, **dadurch gekennzeichnet, dass** das Verhältnis von Innendurchmesser D1 des Schlauchs (7) zum Außendurchmesser des Bündels (5) kleiner als 1,5 beträgt.

4. Ummantelter Lichtleiter gemäß einem der vorstehenden Ansprüche, **gekennzeichnet durch** eine strukturierte Innenwandung des Schlauchs (7),

5. Ummantelter Lichtleiter gemäß dem vorstehenden Anspruch, **gekennzeichnet durch** eine Wellen-artig strukturierte Innenwandung des Schlauches (7).

6. Ummantelter Lichtleiter gemäß einem der beiden vorstehenden Ansprüche, **dadurch gekennzeichnet, dass** der Schlauch (7) zumindest zwei Sektoren (74, 75) unterschiedlicher Elastomermaterialien (240, 241) aufweist.

7. Ummantelter Lichtleiter gemäß dem vorstehenden Anspruch, **dadurch gekennzeichnet, dass** der Schlauch (7) einen ersten Sektor (74) aus transparentem Elastomermaterial (240) und einen zweiten Sektor (75) aus diffus reflektierendem oder hellem, insbesondere weißem Elastomermaterial (241) aufweist.

8. Ummantelter Lichtleiter gemäß einem der fünf vorstehenden Ansprüche, wobei der Schlauch (7) in radialer Richtung eine erste, innere Lage (77) mit einem Elastomermaterial (24), welche auch die Innenwandung (70) des Schlauchs (7) bildet, sowie eine weitere Lage (78) mit einer in einen Kunststoff, vorzugsweise in einem Elastomer eingebetteten Verstärkung (12).

9. Verfahren zur Herstellung eines ummantelten Lichtleiters (1) mit mehreren, ein Bündel (5) bildenden lichtleitenden Fasern (10), wobei das Bündel (5) von einer Ummantelung (3) umgeben ist, wobei zur Herstellung des ummantelten Lichtleiters (1)
- das Bündel (5) entlang der Längsrichtung der Fasern (10) durch eine Öffnung (26) eines Spritzwerkzeugs (20) geführt wird, während
- aus einer das Bündel umgebenden Düsenöffnung (22) Elastomermaterial (24) zugeführt wird, so dass das Elastomermaterial (24) einen das Bündel (5) umgebenden Schlauch (7) bildet, und wobei
- durch zumindest eine Öffnung (26, 28) im Spritzwerkzeug (20), welche innerhalb der Düsenöffnung (22) angeordnet ist, ein Fluid (9) in das Innere des Schlauchs (7) zugeführt wird **dadurch gekennzeichnet dass**
- das Elastomermaterial (24) zumindest an der Innenwandung (70) des Schlauchs (7) im Bereich des Fluids (9) verfestigt wird, um eine Einbettung oder ein Anhaften der Fasern (10) an dem Elastomermaterial (24) zu vermeiden, wobei das Verfestigen des Elastomermaterials (24) durch eine Vernetzung erfolgt, und **dadurch gekennzeichnet dass**
- das Elastomermaterial (24) ein heißvernetzendes Elastomer umfasst und das Fluid (9) mit einer Temperatur zugeführt wird, welche zu einer Heißvernetzung des heißvernetzenden Elastomers führt, oder
- das Elastomermaterial (24) ein chemisch vernetzendes Elastomer enthält und durch das Fluid (9) ein Agens zur chemischen Vernetzung zugeführt wird.

10. Verfahren gemäß Anspruch 9, **dadurch gekennzeichnet, dass** das Fluid zwischen dem Bündel (5) und der Innenwandung (70) des Schlauchs (7) während der Verfestigung des Elastomermaterials einen Abstand des Elastomermaterials zum Bündel (5) der lichtleitenden Fasern (10) aufrechterhält.

11. Verfahren gemäß einem der Ansprüche 9 oder 10, **dadurch gekennzeichnet, dass** eine Vernetzung des Elastomermaterials (24) durch das in das Innere des Schlauchs (7) eingeleitete Fluid bewirkt wird.

12. Verfahren gemäß einem der Ansprüche 9 bis 11, **dadurch gekennzeichnet, dass** Gas oder ein Gasgemisch als Fluid (9), vorzugsweise Luft, zugeführt wird.

13. Vorrichtung zur Herstellung ummantelter Lichtleiter (1), mit einem Spritzwerkzeug (20) mit einer Öffnung (26) zur Durchführung eines Bündels (5) von lichtleitenden Fasern (10), sowie eine die Öffnung zur Durchführung eines Bündels (5) von lichtleitenden Fasern (109) umgebenden Düsenöffnung (22) zur Zuführung von Elastomermaterial (24) und eine mit der Düsenöffnung (22) kommunizierenden Fördereinrichtung (240) für das Elastomermaterial (24), wobei die Vorrichtung (1) eine Transporteinrichtung umfasst, um das Bündel (5) während der Extrusion des Elastomermaterials (24) durch die Öffnung (26) des Spritzwerkzeugs (20) zu führen, und wobei die Vorrichtung eine Fluidfördereinrichtung (90) aufweist, welche mit einer innerhalb der Düsenöffnung (22) des Spritzwerkzeugs (20) angeordneten Öffnung (26, 28) kommuniziert, so dass während der Extrusion des Elastomermaterials (24) ein von der Fluidfördereinrichtung (90) gefördertes Fluid (9) in einen sich durch die Extrusion um das Bündel (5) ausbildenden Schlauchs (7) im Bereich vor der Düsenöffnung (22) des Spritzwerkzeugs (20) einführbar ist, um eine Einbettung oder ein Anhaften der Fasern (10) an dem Elastomermaterial (24) zu vermeiden, wobei eine Einrichtung zum Vernetzen des Elastomermaterials (24) vorgesehen ist, **dadurch gekennzeichnet dass**
- das Elastomermaterial (24) ein heißvemetzendes Elastomer umfasst und die Einrichtung zum Vernetzen eine Heizeinrichtung (91) umfasst, um das Fluid (9) mit einer Temperatur zuzuführen, welche zu einer Heißvernetzung des heißvernetzenden Elastomers führt, oder
- das Elastomermaterial (24) ein chemisch vernetzendes Elastomer enthält und durch das Fluid (9) ein Agens zur chemischen Vernetzung zuführbar ist.

14. Vorrichtung gemäß dem vorstehenden Anspruch, **gekennzeichnet durch** eine Einrichtung zur Erwärmung des durch die Zugvorrichtung (14) transportierten ummantelten Lichtleiters (1).

## Claims

1. A sheathed optical waveguide, comprising a plurality of light conducting fibres (10) which form a bundle (5), said bundle (5) being surrounded by a sheathing (3) in the form of a tube (7) of crosslinked elastomeric material (24), **characterized in that**
the inner wall (70) of the tube (7) has imprints (72) of the light conducting fibres (10), while the light conducting fibres (10) are not materially bonded to the elastomeric material on the inner wall (70) of the tube (7) nor are they embedded in the inner wall.

2. The sheathed optical waveguide according to the preceding claim, **characterized in that** the elastomeric material (24) of the tube (7) comprises an elastomeric silicone.

3. The sheathed optical waveguide according to any one of the two preceding claims, **characterized in that** the ratio of the inner diameter D1 of the tube (7) to the outer diameter of the bundle (5) is less than 1.5.

4. The sheathed optical waveguide according to any one of the preceding claims, **characterized by** a textured inner wall of the tube (7).

5. The sheathed optical waveguide according to the preceding claim, **characterized by** a corrugated texture of the inner wall of the tube (7).

6. The sheathed optical waveguide according to any one of the two preceding claims, **characterized in that** the tube (7) comprises at least two sectors (74, 75) made of different elastomeric materials (240, 241).

7. The sheathed optical waveguide according to the preceding claim, **characterized in that** the tube (7) has a first sector (74) made of a transparent elastomeric material (240) and a second sector (75) made of a diffusely reflecting or light-coloured, in particular white elastomeric material (241).

8. The sheathed optical waveguide according to any one of the five preceding claims, wherein the tube (7) has a radially first, inner layer (77) made of an elastomeric material (24) which defines the inner wall (70) of the tube (7), and a further layer (78) including a reinforcement (12) embedded into a plastic material, preferably into an elastomer,

9. A method for producing a sheathed optical waveguide (1) that comprises a plurality of light conducting fibres (10) which form a bundle (5), the bundle (5) being enclosed by a sheathing (3), wherein for producing the sheathed optical waveguide (1)
- the bundle (5) is passed through an opening (26) of an injection tool (20) along the longitudinal extension of the fibres (10) while
- feeding elastomeric material (24) from a nozzle orifice (22) surrounding the bundle, so that the elastomeric material (24) forms a tube (7) surrounding the bundle (5); and wherein
- a fluid (9) is fed into the interior of the tube (7) through at least one opening (26, 28) in the injection tool (20), which is arranged inside of the nozzle orifice (22);
**characterized in that**
- the elastomeric material (24) is caused to solidify at least on the inner wall (70) of the tube (7) next to the fluid (9) in order to prevent the fibres (10) from becoming embedded in or adhering to the elastomeric material (24), wherein the solidifying of the elastomeric material (24) is accomplished by crosslinking; and **characterized in that**
- the elastomeric material (24) comprises a hot crosslinking elastomer and the fluid (9) is supplied at a temperature which causes hot crosslinking of the hot crosslinking elastomer; or
- the elastomeric material (24) comprises a chemically crosslinking elastomer and the fluid (9) supplies an agent for chemical crosslinking.

10. The method according to claim 9, **characterized in that** the fluid between the bundle (5) and the inner wall (70) of the tube (7) keeps a spacing between the elastomeric material and the bundle (5) of light conducting fibres (10) during the solidifying of the elastomeric material.

11. The method according to any one of claims 9 or 10, **characterized in that** crosslinking of the elastomeric material (24) is caused by the fluid that is introduced into the interior of the tube (7).

12. The method according to any one of claims 9 to 11, **characterized in that** the fluid (9) is supplied in the form of gas or a gas mixture, preferably air.

13. An apparatus (19) for producing sheathed optical waveguides (1), comprising an injection tool (20) having an opening (26) for passing therethrough a bundle (5) of light conducting fibers (10), and a nozzle orifice (22) surrounding the opening for passing a bundle (5) of light conducting fibers (10) for feeding elastomeric material (24), and a feeding means (230) for the elastomeric material (24) in communication with said nozzle orifice (22); wherein the apparatus (19) comprises conveyor means for passing the bundle (5) through the opening (26) of the injection tool (20) while extruding the elastomeric material (24), and wherein the apparatus comprises fluid feeding means (90) in communication with an opening (26, 28) that is provided inside of the nozzle orifice (22) of the injection tool (20), so that during the extrusion of the elastomeric material (24) a fluid (9) supplied by said fluid feeding means (90) is introducible into a tube (7) that is being formed by the extrusion around the bundle (5) in front of the nozzle orifice (22) of the injection tool (20), in order to prevent the fibres (10) from becoming embedded in or adhering to the elastomeric material (24); wherein means for crosslinking the elastomeric material (24) are provided; **characterized in that**
- the elastomeric material (24) comprises a hot crosslinking elastomer and said crosslinking means comprise heating means (91) for supplying the fluid (9) at a temperature which causes hot crosslinking of the hot crosslinking elastomer; or
- the elastomeric material (24) comprises a chemically crosslinking elastomer and the fluid (9) allows to feed an agent for chemical crosslinking.

14. The apparatus according to the preceding claim, **characterized by** means for heating the sheathed optical waveguide (1) that is being conveyed by the pulling means (14).

## Revendications

1. Conducteur optique enrobé avec plusieurs fibres optiques (10) formant un faisceau (5), dans lequel le faisceau (5) est entouré d'un enrobage (3) sous la forme d'une gaine (7) avec un matériau élastomère réticulé (24), **caractérisé en ce que** la paroi interne (70) de la gaine (7) comprend des empreintes (72) des fibres optiques (10), dans lequel les fibres optiques (10) ne sont ni reliées avec l'élastomère sur la paroi interne (70) de la gaine (7) par liaison de matière ni intégrées dans la paroi interne ;

2. Conducteur optique enrobé selon la revendication précédente, **caractérisé en ce que** le matériau élastomère (24) de la gaine (7) comprend une silicone élastomère.

3. Conducteur optique enrobé selon l'une des deux revendications précédentes, **caractérisé en ce que** le rapport entre le diamètre interne D1 de la gaine (7) et le diamètre extérieur du faisceau (5) est inférieur à 1,5.

4. Conducteur optique enrobé selon l'une des revendications précédentes, **caractérisé par** une paroi interne structurée de la gaine (7).

5. Conducteur optique enrobé selon la revendication précédente, **caractérisé par** une paroi interne structurée de manière ondulée de la gaine (7).

6. Conducteur optique enrobé selon l'une des deux revendications précédentes, **caractérisé en ce que** la gaine (7) comprend au moins deux secteurs (74, 75) de matériaux élastomères différents (240,241).

7. Conducteur optique enrobé selon la revendication précédente, **caractérisé en ce que** la gaine (7) comprend un premier secteur (74) en matériau élastomère transparent (240) et un deuxième secteur (75) en matériau élastomère (241) réfléchissant de manière diffuse ou clair, plus particulièrement blanc.

8. Conducteur optique enrobé selon l'une des cinq revendications précédentes, dans lequel la gaine (7) constitue, dans la direction radiale, une première couche interne (77) avec un matériau élastomère (24), qui constitue également la paroi interne (70) de la gaine (7), ainsi qu'une couche supplémentaire (78) avec un renforcement (12) intégré dans une matière plastique, de préférence dans un élastomère.

9. Procédé de fabrication d'un conducteur optique enrobé (1) avec plusieurs fibres optiques (10) formant un faisceau (5), le faisceau (5) étant entouré d'un enrobage (3), dans lequel, pour la fabrication du conducteur optique enrobé (1)
- le faisceau (5) est guidé le long de la direction longitudinale des fibres (10) à travers une ouverture (26) d'un outil d'injection (20), tandis que
- à partir d'une ouverture de buse (22) entourant le faisceau, un matériau élastomère (24) est introduit, de façon à ce que le matériau élastomère (24) forme une gaine (7) entourant le faisceau (5), et où
- à travers au moins une ouverture (26, 28) dans l'outil d'injection (20), qui est disposé à l'intérieur de l'ouverture de buse (22), un fluide (9) est introduit à l'intérieur de la gaine (7), **caractérisé en ce que**
- le matériau élastomère (24) est durci au moins sur la paroi interne (70) de la gaine (7) au niveau du fluide (9), afin d'éviter une intégration ou une adhérence des fibres (10) au matériau élastomère (24), où le durcissement du matériau élastomère (24) est réalisé à l'aide d'une réticulation et **caractérisé en ce que**
- le matériau élastomère (24) comprend un élastomère réticulable à chaud et le fluide (9) est introduit avec une température qui conduit à une réticulation à chaud de l'élastomère réticulable à chaud, ou
- le matériau élastomère (24) contient un élastomère réticulable chimiquement et le fluide (9) permet d'introduire un agent de réticulation chimique.

10. Procédé selon la revendication 9, **caractérisé en ce que** le fluide maintient, entre le faisceau (5) et la paroi interne (70) de la gaine (7), pendant le durcissement du matériau élastomère, une distance entre le matériau élastomère et le faisceau (5) de fibres optiques (10).

11. Procédé selon l'une des revendications 9 ou 10, **caractérisé en ce qu'**une réticulation du matériau élastomère (24) est provoquée par le fluide introduit à l'intérieur de la gaine (7).

12. Procédé selon l'une des revendications 9 à 11, **caractérisé en ce que**, en tant que fluide (9), un gaz ou un mélange de gaz, de préférence de l'air, est introduit.

13. Dispositif de fabrication d'un conducteur optique enrobé (1), avec un outil d'injection (20) avec une ouverture (26) pour le passage d'un faisceau (5) de fibres optiques (10), ainsi qu'une ouverture de buse (22) entourant l'ouverture de passage d'un faisceau (5) de fibres optiques (10) pour l'introduction d'un matériau élastomère (24) et un dispositif de convoyage (240) communiquant avec l'ouverture de buse (22) pour le matériau élastomère (24), où le dispositif (1) comprend un dispositif de transport afin de guider le faisceau (5) pendant l'extrusion du matériau élastomère (24) à travers l'ouverture (26) de l'outil d'injection (20) et où le dispositif comprend un dispositif de convoyage de fluide (90) qui communique avec une ouverture (26, 28) disposée à l'intérieur de l'ouverture de buse (22) de l'outil d'injection (20), de façon à ce que, pendant l'extrusion du matériau élastomère (24), un fluide (9) convoyé par le dispositif de convoyage de fluide (90) puisse être introduit dans une gaine (7) se formant autour du faisceau (5) du fait de l'extrusion, dans la zone avant l'ouverture de buse (22) de l'outil d'injection (20), afin d'éviter une intégration ou une adhérence des fibres (10) au matériau élastomère (24), où un dispositif pour la réticulation du matériau élastomère (24) est prévu, **caractérisé en ce que**
- le matériau élastomère (24) comprend un élastomère réticulable à chaud et le dispositif de réticulation comprend un dispositif de chauffage (91) afin d'introduire le fluide (9) avec une température qui conduit à une réticulation à chaud de l'élastomère réticulable à chaud, ou
- le matériau élastomère (24) contient un élastomère réticulable chimiquement et le fluide (9) permet d'introduire un agent de réticulation chimique.

14. Dispositif selon la revendication précédente, **caractérisé par** un dispositif de chauffage du conducteur optique enrobé (1) transporté par le dispositif de traction (14).
